(19) Europäisches Patentamt

European Patent Office

Office européen des brevets

(11) **EP 1 358 733 B1**

(12) **FASCICULE DE BREVET EUROPEEN**

(45) Date de publication et mention
de la délivrance du brevet:
**07.12.2005 Bulletin 2005/49**

(21) Numéro de dépôt: **02703661.5**

(22) Date de dépôt: **06.02.2002**

(51) Int Cl.⁷: **H04L 9/06**

(86) Numéro de dépôt international:
**PCT/FR2002/000454**

(87) Numéro de publication internationale:
**WO 2002/063822 (15.08.2002 Gazette 2002/33)**

(54) **PROCEDE SECURISE DE CALCUL CRYPTOGRAPHIQUE A CLE SECRETE ET COMPOSANT METTANT EN OEUVRE UN TEL PROCEDE**

**VERFAHREN ZUR GESICHERTEN KRYPTOGRAPHISCHEN BERECHNUNG MIT GEHEIMSCHLÜSSEL UND BAUSTEIN ZUR AUSFÜHRUNG DES VERFAHRENS**

**SECURE METHOD FOR SECRET KEY CRYPTOGRAPHIC CALCULATION AND COMPONENT USING SAID METHOD**

(84) Etats contractants désignés:
**DE FR GB IT**

(30) Priorité: **08.02.2001 FR 0101684**

(43) Date de publication de la demande:
**05.11.2003 Bulletin 2003/45**

(73) Titulaire: **STMicroelectronics SA
92120 Montrouge (FR)**

(72) Inventeurs:
• **ROMAIN, Fabrice
13100 Aix en Provence (FR)**
• **TEGLIA, Yannick
F-13011 Marseille (FR)**

(74) Mandataire: **Bentz, Jean-Paul
Cabinet Ballot
9, rue Claude Chappe
Metz Technopôle
57070 Metz (FR)**

(56) Documents cités:
**FR-A- 2 776 445**

• **HINDIN H J: "LSI-based data encryption discourages the data thief" ELECTRONICS, VNU BUSINESS PUBLICATIONS, NEW YORK, US, vol. 52, no. 13, 21 juin 1979 (1979-06-21), pages 107-120, XP002130529 ISSN: 0883-4989**

**Description**

La présente invention concerne un procédé sécurisé de calcul cryptographique à clé secrète ou privée. La présente invention concerne également un composant mettant en oeuvre un tel procédé sécurisé. Plus particulièrement, le procédé de l'invention vise à protéger de tels composants contre une attaque physique de type SPA *(Simple Power Analysis).* De telles attaques ont pour objectif d'obtenir des informations sur la clé secrète ou privée à partir de la consommation énergétique ou du rayonnement électromagnétique du composant lorsqu'il met en oeuvre le procédé de cryptage.

Les composants concernés par l'invention sont notamment utilisés pour des applications où l'accès aux services et / ou aux données est sévèrement contrôlé. Ces composants ont le plus souvent une architecture formée autour d'un microprocesseur et d'une mémoire de programme comprenant notamment la clé secrète.

De tels composants sont par exemple utilisés dans des cartes à puces, notamment pour des applications de type bancaire, par l'intermédiaire d'un terminal de commande ou à distance.

De tels composants utilisent un ou des procédés de cryptage à clé secrète ou privée pour calculer une donnée de sortie à partir d'une donnée d'entrée. Un tel procédé est par exemple utilisé pour chiffrer, déchiffrer, authentifier, signer un message d'entrée ou bien vérifier la signature dudit message d'entrée.

Pour assurer la sécurité des transactions, les procédés de cryptage à clé secrète ou privée sont construits de sorte qu'il ne soit pas possible de déterminer la clé secrète utilisée à partir de la connaissance de la donnée d'entrée et / ou de la donnée de sortie de l'algorithme. Cependant, la sécurité d'un composant repose sur sa capacité à maintenir cachée la clé secrète qu'il utilise, car cette clé ne peut pas être modifiée.

Un procédé fréquemment utilisé est le procédé de type DES (pour *Data Encryption Standard).* Il permet par exemple de fournir un message chiffré MS (ou donnée de sortie) codé sur 64 bits, à partir d'un message clair ME (ou donnée d'entrée) également codé sur 64 bits et d'une clé secrète $K_0$ de 56 bits.

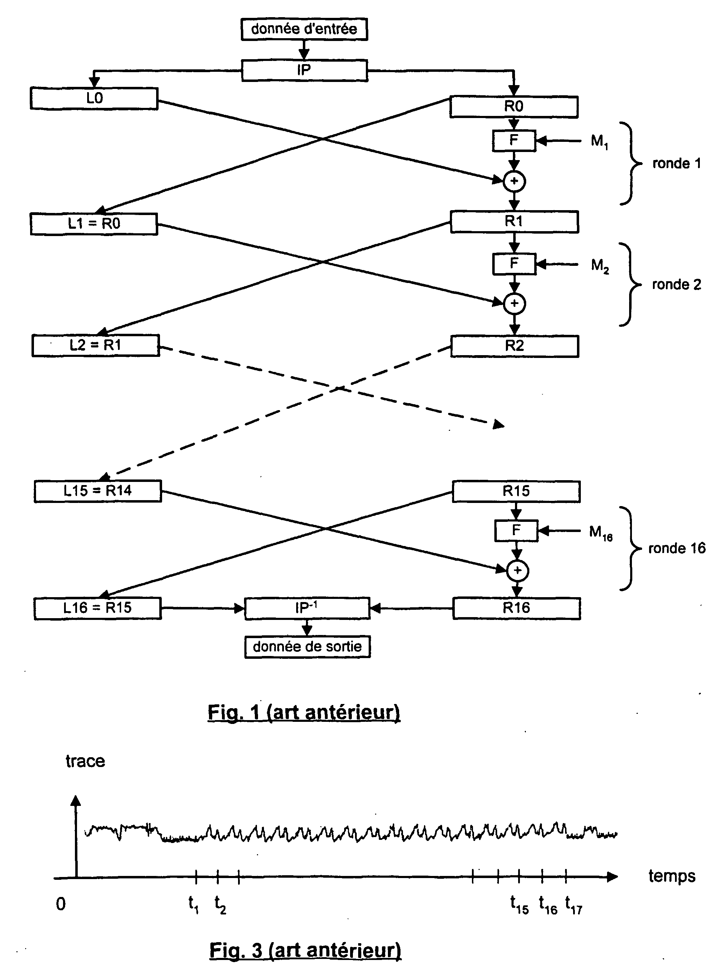

Les principales étapes du procédé DES sont détaillées sur la figure 1. Après une permutation initiale IP, le bloc formé des bits de la donnée d'entrée permutés, est séparé en une partie gauche $L_0$ et une partie droite $R_0$.

Après cela, 16 rondes d'opérations identiques sont réalisées. Lors de chaque ronde d'opérations, la partie droite ($R_0$,... , $R_{15}$) d'une donnée intermédiaire calculée lors de la précédente ronde d'opérations est combinée avec une clé dérivée ($M_1$, ... , $M_{16}$) au cours d'une transformation dite transformation F. Le résultat de la transformation F est ensuite additionné (OU-Exclusif) à la partie gauche ($L_0$, ... , $L_{15}$) de la donnée intermédiaire calculée lors de la précédente ronde d'opérations.

Après la 16ème ronde d'opérations, les parties gauche $L_{16}$ et droite $R_{16}$ de la 16ième donnée intermédiaire sont assemblées et une permutation finale $IP^{-1}$, inverse de la permutation initiale IP, termine le procédé.

Une ronde d'opérations de rang i compris entre 1 et 16 est détaillée sur la figure 2. Les 56 bits d'une clé intermédiaire $K_{i-1}$ calculée lors de la ronde précédente sont décalés (opération $S_i$) pour fournir une nouvelle clé intermédiaire actualisée $K_i$, puis 48 bits sur 56 sont sélectionnés par une opération PC de permutation /compression pour fournir une clé dérivée $M_i$. $M_i = PC(K_i) = PC(S_i(K_{i-1}))$. L'association des étapes PC et $S_i$ forme une étape ET2 de calcul de clé.

En parallèle, la transformation F est réalisée. La partie droite $R_{i-1}$ d'une donnée intermédiaire calculée lors de la ronde précédente, est étendue à 48 bits par une expansion (opération E), combinée avec la clé dérivée $M_i$ par une opération de type OU-Exclusif, remplacée par 32 nouveaux bits par une opération de substitution (représentée par l'opération SBOX) puis permutée une fois de plus (opération P). Dans la pratique, les opérations F, P, E, PC, SBOX sont identiques pour toutes les rondes. Par contre, les opérations $S_1$ à $S_{16}$ utilisées lors du calcul des clés dérivées $K_1$ à $K_{16}$ sont différentes d'une ronde à l'autre.

Toutes les caractéristiques des opérations IP, $IP^{-1}$, P, PC, E, SBOX, $S_i$, réalisées lors de la mise en oeuvre d'un procédé DES sont connues : calculs effectués, paramètres utilisés, etc. Ces caractéristiques sont par exemple décrites de manière détaillée dans la demande de brevet WO 00/46953 ou dans la norme "Data Encryption Standard, FIPS PUB 46", publiée le 15 janvier 1977.

La sûreté d'un composant utilisant un procédé de cryptage à clé secrète ou privée réside dans sa capacité à conserver secrète la clé qu'il utilise, notamment lors qu'il subit des analyses de type SPA.

Une analyse SPA consiste à faire exécuter plusieurs fois, par le composant, le procédé de cryptage qu'il utilise en lui appliquant la même donnée d'entrée ME, et à mesurer, pour chaque exécution du procédé, la trace laissée par cette exécution en fonction du temps. La trace représente par exemple la consommation énergétique du composant ou l'énergie électromagnétique rayonnée en fonction du temps. L'ensemble des mesures est ensuite moyenné pour éliminer le bruit de la mesure et obtenir la trace réelle du circuit pour une donnée d'entrée ME fixée. A titre indicatif, un ensemble de 10 à 1000 mesures identiques peut suffire pour éliminer le bruit de la mesure et obtenir la trace réelle du composant pour une donnée d'entrée ME fixée.

L'allure d'une telle trace est représentée sur la figure 3, dans le cas d'un procédé de type DES. On distingue nettement sur cette figure les différentes étapes du procédé DES : permutation initiale IP avant l'instant t1, 16 rondes d'opérations entre les instants t2 et t1, t3 et t2, ..., t17 et t16, permutation finale IP$^{-1}$ après l'instant t17.

Comme on le voit sur la trace de la figure 3, il est ainsi assez simple d'obtenir de l'information sur la clé secrète utilisée dans le cas d'un composant utilisant un procédé DES classique. Par exemple, il est possible, pour chaque ronde d'opérations, de déterminer une image d'une clé dérivée $M_i$ en identifiant l'intervalle de temps au cours duquel une instruction de transfert de clé dérivée est réalisée avant l'exécution de l'opération OU-Exclusif. Toutes les clés dérivées $M_i$ à $M_{16}$ étant obtenues à partir de la clé secrète $K_0$ par des opérations connues, la connaissance de simples images des clés dérivées donne une information sur la clé secrète.

Plus généralement, tous les procédés de cryptage utilisant des clés secrètes sont plus ou moins sensibles aux analyses de type SPA. Leur sensibilité est notamment importante lors de la réalisation d'une étape dite critique, au cours de laquelle la clé secrète est utilisée soit directement soit sous une forme dérivée obtenue par une loi de calcul de clé dérivée connue. Une telle étape critique est par exemple une étape de calcul de clé dérivée (en anglais : Key Scheduling), au cours de laquelle, une clé dérivée actualisée $M_i$ est calculée à partir d'une clé précédemment calculée $K_{i-1}$.

Un procédé cryptographique protégé contre une analyse des signaux dérivés est divulgué par la demande de brevet FR 2 776 445. Ce procédé produit une clé masquée pour chaque cycle de l'algorithme.

Un objet de l'invention est de mettre en oeuvre un procédé sécurisé de calcul cryptographique à clé secrète ou privée qui est immunisé contre toute attaque physique de type SPA, c'est-à-dire un procédé sécurisé de calcul cryptographique dont la trace, lors de la mise en oeuvre du procédé, ne donne aucune information sur la clé qu'il utilise, et ce quelle que soit la donnée d'entrée utilisée par le procédé, et quel que soit le nombre d'utilisations du procédé.

Avec cet objectif en vue, l'invention concerne un procédé sécurisé de calcul cryptographique pour fournir une donnée de sortie à partir d'une donnée d'entrée et d'une clé secrète. Le procédé comprend plusieurs étapes de calcul de clé fournissant chacune une clé dérivée actualisée à partir d'une clé dérivée précédemment calculée selon une loi de calcul de clé connue. Une première clé dérivée actualisée est obtenue à partir de la clé secrète.

Selon l'invention, le procédé comprend également une seule étape de masquage effectuée avant la première étape de calcul de clé pour masquer la clé secrète de sorte que chaque clé dérivée actualisée soit différente à chaque mise en oeuvre de procédé.

L'invention concerne également un composant électronique utilisant un procédé sécurisé de calcul cryptographique selon l'invention.

Le mot "masqué" (ou "mélangé") doit être compris ici, et dans tout ce qui suit, dans le sens suivant. Dans un procédé selon l'invention, une donnée, un résultat, sont dits masqués s'ils ont une valeur différente lors de deux exécutions du procédé, notamment lors de deux exécutions du procédé utilisant la même donnée d'entrée et la même clé secrète.

Ainsi, avec un procédé sécurisé de calcul cryptographique selon l'invention, un composant qui exécute deux fois le procédé avec la même donnée d'entrée fournit deux traces différentes, notamment sur un intervalle de temps critique correspondant à la trace laissée par une instruction critique du procédé, qui utilise la clé dérivée.

En d'autres termes, quelle que soit la donnée d'entrée utilisée, et même si la donnée d'entrée est identique lors de plusieurs mises en oeuvre du procédé de calcul cryptographique sécurisé selon l'invention, la trace laissée par le composant est toujours différente d'une mise en oeuvre à l'autre.

Pour obtenir cela, lors de l'étape de masquage, un paramètre de masquage choisi aléatoirement est mélangé à la clé secrète pour fournir une clé secrète masquée, la première clé dérivée étant calculée à partir de la clé secrète masquée lors de la première étape de calcul de clé.

Après la réalisation de l'étape de masquage, la clé secrète non masquée peut éventuellement être effacée car elle n'est plus utilisée par la suite ; seule, la clé secrète est utilisée pour la suite de la mise en oeuvre du procédé. La sécurité du procédé est ainsi renforcé.

Ainsi, avec l'invention, toute clé effectivement manipulée lors de la mise en oeuvre du procédé est un nombre aléatoire car issu d'un masquage par un nombre aléatoire (le paramètre de masquage). En conséquence, la trace du composant utilisant le procédé est elle-même aléatoire d'une mise en oeuvre à l'autre du procédé, du simple fait de la présence du paramètre de masquage choisi aléatoirement avant chaque mise en oeuvre.

En conséquence, même si plusieurs mesures de traces du composant sont effectuées en utilisant des données d'entrée identiques, le moyennage de ces mesures aboutira à une trace moyenne constante en fonction du temps (moyenne d'un ensemble de traces aléatoires), qui ne donnera aucune information sur la valeur de la clé utilisée, même si des opérations critiques sont réalisées. Ainsi, avec l'invention, le composant est immunisé complètement contre toute attaque physique de type SPA.

L'invention utilise ainsi un point faible d'une attaque de type SPA, pour protéger le composant. En effet, pour qu'une attaque de type SPA aboutisse, c'est-à-dire pour qu'une attaque de type SPA fournisse une information sur la clé secrète utilisé par le composant, il faut nécessairement qu'il existe un intervalle de temps critique :

- pour lequel la trace du composant est identique sur cet intervalle, éventuellement lorsque la donnée d'entrée ME est identique,

- et durant lequel l'information visible est pertinente, c'est-à-dire qu'elle est représentative de tout ou partie de la clé secrète et / ou de tout ou partie d'une clé dérivée de la clé secrète.

Le composant de l'invention fournit des traces différentes lors de chaque mise en oeuvre du procédé de l'invention, même si la donnée d'entrée utilisée est la même. En conséquence, il n'est pas possible de trouver un intervalle critique durant lequel l'information visible est pertinente et identique d'une mise en oeuvre à l'autre du procédé. Une attaque SPA sur ce composant ne peut donc pas fournir d'information sur la clé secrète.

Selon une variante, le procédé de l'invention comprend également :

- une étape de calcul utilisant la clé dérivée calculée ou une clé dérivée actualisée, et
- une étape de démasquage, exécutée après l'étape de calcul, pour supprimer la contribution du paramètre de masquage sur le résultat de l'étape de calcul.

Selon une autre variante, le procédé de l'invention comprend plusieurs étapes de calcul utilisant chacune une clé dérivée actualisée, et une étape de démasquage est exécutée après chaque étape de calcul pour supprimer la contribution du paramètre de masquage au résultat de l'étape de calcul précédente.

Au cours de l'étape de masquage, l'opération suivante est, par exemple, réalisée : $K'_0 = K_0 \mid X_0$, $K'_0$ étant la clé secrète masquée, $K_0$ étant la clé secrète, $X_0$ étant le paramètre de masquage. L'opérateur " $\mid$ " est un opérateur de mélange, de préférence un opérateur linéaire à deux paramètres. Dans un exemple, l'opérateur de mélange est un opérateur OU-Exclusif.

Au cours de l'étape de démasquage, un opérateur inverse de l'opérateur de mélange est de préférence utilisé, pour enlever la contribution du paramètre de masquage à la clé dérivée actualisée.

Selon un mode de réalisation préféré de réalisation de l'invention, le procédé est un procédé sécurisé de type DES, qui comprend 16 rondes d'opérations, chaque ronde d'opérations utilisant une clé dérivée actualisée.

Dans un exemple, une seule étape de masquage est réalisée, avant la première ronde du procédé de type DES.

A chaque ronde d'opérations :

- une transformation est réalisée qui comprend une étape de calcul pour combiner une donnée intermédiaire calculée lors d'une précédente ronde et une clé dérivée actualisée,
- une étape de démasquage est réalisée après l'étape de calcul.

Chaque clé dérivée actualisée masquée peut être calculée au cours de la ronde d'opérations qui l'utilise. Ou bien toutes les clés dérivées peuvent être calculées par ailleurs, indépendamment des rondes d'opérations qui les utilisent, elles peuvent par exemple être calculées avant ou au cours d'une phase d'initialisation du procédé.

L'invention sera mieux comprise et d'autres caractéristiques et avantages apparaîtront à la lecture de la description qui va suivre d'exemples de mise en oeuvre de procédés sécurisés de calcul cryptographique selon l'invention. La description est à lire en référence aux dessins annexés dans lesquels :

- la figure 1, déjà décrite, est un diagramme d'un procédé connu de cryptage utilisant une clé secrète,
- la figure 2, déjà décrite, est un diagramme détaillant une étape du procédé de la figure 1,
- la figure 3, déjà décrite, est la trace réelle laissée par un composant utilisant le procédé de cryptage de la figure 1, en fonction du temps,
- la figure 4 est un diagramme d'un procédé de cryptage simplifié,
- la figure 5 est un diagramme du procédé de la figure 4, sécurisé selon l'invention,
- la figure 6 est un diagramme d'un procédé de type DES, sécurisé selon l'invention.

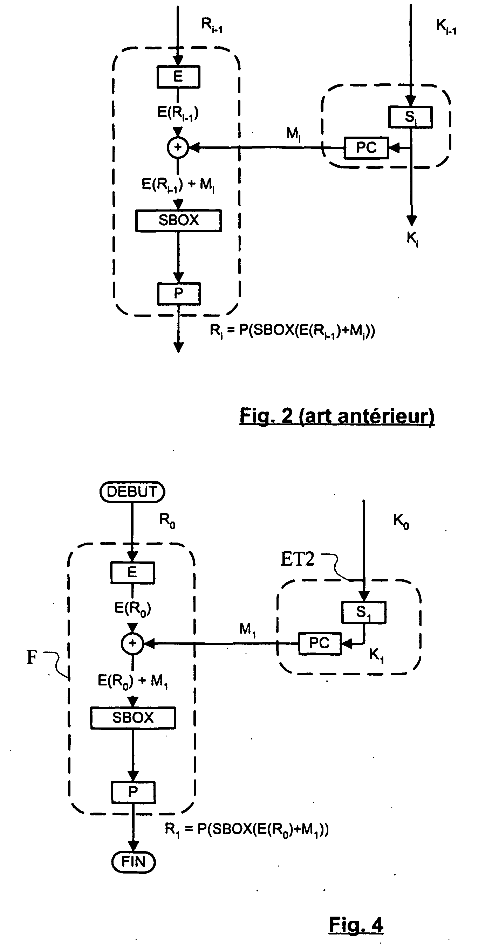

Dans le premier exemple ci-dessous, on considère un le procédé dont le diagramme est représenté sur la figure 4 ; il est utilisé pour coder une donnée d'entrée $R_0$ de 32 bits, et fournir une donnée de sortie $R_1$ de 32 bits à partir d'une clé secrète $K_0$ et de la donnée d'entrée $R_0$.

Le procédé se décompose en une étape ET2 de calcul de clé dérivée et une étape de transformation F.

L'étape ET2 de calcul de clé dérivée fournit une clé dérivée $M_1$ à partir de la clé secrète $K_0$. L'étape de calcul de clé se compose d'une opération $S_1$ de décalage des bits de la variable $K_0$, qui fournit $K_1 = S_1(K_0)$ et d'une opération PC de permutation / compression. Ainsi, la clé dérivée $M_1$ est obtenue par la relation : $M_1 = PC(S_1(K_0))$.

L'étape F de transformation fournit la donnée de sortie $R_1$ à partir de la donnée d'entrée $R_0$ et de la clé dérivée $M_1$.

L'étape de transformation F est identique à l'étape F d'un procédé de type DES classique, et se décompose de la manière suivante. La donnée $R_0$ est étendue de 32 à 48 bits par une expansion E, combinée avec la clé dérivée $M_1$ par un OU-Exclusif, remplacée par 32 nouveaux bits lors d'une opération de substitution SBOX puis permutée à nouveau (opération P). Ainsi, la donnée de sortie $R_1$ est obtenue par la relation : $R_1 = P(SBOX(E(R_0)+M_1))$.

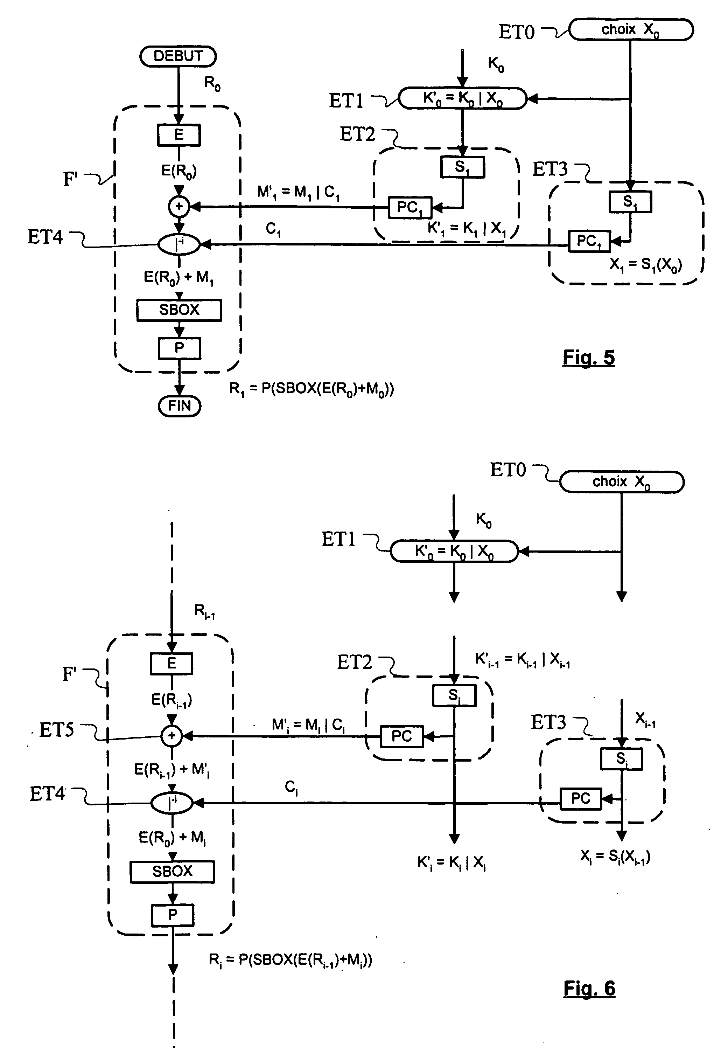

Le procédé de la figure 4 est sécurisé selon l'invention par l'ajout d'une étape d'initialisation ET0, d'une étape de masquage ET1, d'une étape de calcul de différence ET3 et d'une étape de démasquage ET4 (figure 5).

Au cours de l'étape d'initialisation ET0, un paramètre de masquage $X_0$ est choisi, de manière aléatoire.

Au cours de l'étape de masquage ET1, effectuée après l'étape d'initialisation ET0, le paramètre de masquage $X_0$ est mélangé à la clé secrète $K_0$, pour fournir une clé secrète masquée $K'_0$. Le mélange se fait par la relation suivante : $K'_0 = K_0 \mid X_0$ .

L'opérateur " | " est choisi linéaire par rapport aux deux variables qu'il mélange. Dans un mode de réalisation, l'opérateur " | " est un OU-Exclusif. L'opérateur " | " peut également être tout type d'opérateur linéaire. De manière générale, l'opérateur " | " a les propriétés suivantes, quelles que soient les données A, B, C :

- " | " est d'arité deux : il prend deux arguments en paramètres.
- " | " vérifie :

$$PC(S(A|B)) = PC(S(A)) \mid PC(S(B))$$

- " | " vérifie $(A \oplus B) \mid C = A \oplus (B \mid C)$, $\oplus$ étant l'opérateur OU-Exclusif
- il existe un opérateur " $\mid^{-1}$ ", inverse de " | ", tel que $(A \mid B) \mid^{-1} A = B$, éventuellement " | " et " $\mid^{-1}$ " sont identiques.

L'étape ET2 de calcul de clé est ensuite réalisée, à partir de la clé secrète masquée $K'_0$, pour fournir une clé dérivée masquée $M'_1$. Ainsi, la clé dérivée masquée est donnée par la relation : $M'_1 = PC(S_1(K'_0)) = PC(S_1(K_0 \mid X_0))$ $= PC(S_1(K_0)) \mid PC(S_1(X_0))$ .

La dernière égalité se déduit simplement du fait que les opérateurs PC, $S_1$ et " | " sont des opérateurs linéaires.

Comme $PC(S_1(K_0)) = M_1$ (cf. l'exemple de la figure 4), on en déduit finalement que $M'_1 = M_1 \mid PC(S_1(X_0)$, M1 étant la clé dérivée calculée selon le procédé de la figure 4, non sécurisé.

L'étape ET3 de calcul de différence est effectuée après l'étape d'initialisation ET0. L'étape ET3 peut être réalisée avant, en parallèle ou après l'étape ET2 de calcul de clé. L'étape ET3 détermine la contribution $C_1$ apportée par le paramètre $X_0$ à la clé dérivée masquée $M'_1$.

L'étape ET3 est similaire à l'étape ET2 ; l'étape ET3 comprend ainsi une opération $S_1$ pour fournir un paramètre de masquage $X_1 = S_1(X_0)$ actualisé par décalage des bits de $X_0$, et une opération PC pour calculer la contribution $C_1$. La contribution $C_1$ est ainsi calculée selon la relation : $C_1 = PC(S_1(X_0))$. On en déduit finalement $M'_1 = M_1 \mid C_1$.

L'étape ET4 de démasquage est une sous-étape de l'étape de transformation F' (qui correspond à la transformation F modifiée par l'ajout de l'étape ET4 selon l'invention) ; l'étape ET4 est effectuée entre l'opération de combinaison par un OU-Exclusif et l'opération de substitution non linéaire SBOX. L'étape ET4 vise à enlever la contribution $C_1$ apportée par le paramètre de masquage actualisé $X_1$ au résultat de l'opération de combinaison. Pour cela, l'opérateur " $\mid^{-1}$ " est utilisé, opérateur linéaire inverse de l'opérateur " | ". Par exemple, si l'opérateur " | " est un OU-Exclusif, alors l'opérateur " $\mid^{-1}$ " est également un OU-Exclusif. En sortie de l'étape ET4, on a :

$$(E(R_0)+M'_1 \mid^{-1} C_1 = E(R_0)+M_1 \mid C_1 \mid^{-1} C_1 = E(R_0) + M_1$$

Ainsi, après suppression de la contribution $C_1$, la variable qui apparaît à l'entrée de l'opérateur de type SBOX est égale à $E(R_0)+M_1$, c'est-à-dire qu'elle est identique à la variable qui apparaît à l'entrée de l'opérateur SBOX d'un procédé similaire (figure 4) mais non sécurisé selon l'invention. En conséquence, la donnée de sortie qui apparaît en sortie de l'étape de transformation F' est identique à celle qui apparaît en sortie de l'opération de transformation F du procédé non sécurisé de la figure 4.

Comme on vient de le voir, les résultats fournis par les procédés des figures 4 et 5 sont strictement identiques : la valeur de la donnée de sortie est la même dans les deux cas si la donnée d'entrée et la clé secrète sont les mêmes.

De même que le procédé DES classique, le procédé de la figure 4 est sensible aux attaques SPA, pour les mêmes raisons. En effet, pour une même clé secrète $K_0$, la valeur de la clé dérivée $M_1$ est identique à chaque mise en oeuvre du procédé. Une attaque SPA est donc possible en mesurant la trace du procédé, notamment lors de l'intervalle de temps entre l'étape ET2 de calcul de clé et l'étape de transformation F'.

Par contre, le procédé de la figure 5 selon l'invention est immunisé contre les attaques de type SPA. En effet, pour une même valeur de clé secrète $K_0$, la valeur de la clé dérivée correspondante $M'_1$ est toujours différente d'une mise en oeuvre du procédé à une autre car le paramètre de masquage $X_0$, choisi de manière aléatoire lors de l'initialisation de l'algorithme, apporte une contribution $C_1$ aléatoire à la clé dérivée $M'_1$.

Ainsi, selon l'invention, le procédé est protégé contre les attaques SPA, par l'ajout d'un paramètre de masquage aléatoire.

Dans un autre exemple, on considère le procédé de type DES représenté sur les figures 1, 2. Comme on l'a vu précédemment, un procédé cryptographique de type DES calcule une donnée de sortie MS à partir d'une clé secrète $K_0$ et d'une donnée d'entrée ME ; Le procédé DES comprend 16 rondes d'opérations, précédées d'une permutation d'entrée IP et suivies d'une permutation de sortie $IP^{-1}$, inverse de la permutation d'entrée. Chaque ronde d'opérations comprend notamment (figure 2) une étape ET2 de calcul de clé dérivée et une étape F de transformation.

Selon l'invention, le procédé DES est sécurisé (figure 6) par l'ajout d'une étape d'initialisation ET0, d'une étape de masquage ET1, et par l'ajout, à chaque ronde d'opérations, d'une étape ET3 de calcul de différence et d'une étape ET4 de démasquage, similaires à celles de la figure 5. Par souci de clarté et de simplification, seule la $i^{ème}$ ronde d'opérations, a été représentée sur la figure 6, i entier compris entre 1 et 16, avec les étapes caractéristiques ET0 à ET4 de la présente invention.

Au cours de l'étape d'initialisation ET0, un paramètre de masquage $X_0$ est choisi, de manière aléatoire.

Au cours de l'étape de masquage ET1, effectuée après l'étape d'initialisation ET0, le paramètre de masquage $X_0$ est mélangé à la clé secrète $K_0$, pour fournir une clé secrète masquée $K'_0$, comme dans l'exemple précédent. Le mélange se fait par la relation suivante : $K'_0 = K_0 \mid X_0$.

Dans la $i^{ème}$ ronde, l'étape ET2 de calcul de clé dérivée fournit une clé dérivée masquée $M'_i$ de rang i à partir d'une clé intermédiaire masquée $K'_{i-1}$ de rang i-1, calculée lors de l'étape ET2 de la ronde précédente de rang i-1. L'étape ET2 se compose d'une opération $S_i$ de décalage des bits de la clé intermédiaire masquée $K'_{i-1}$ précédemment calculée, et d'une opération PC. On a les relations suivantes :

$$K'_{i-1} = K_{i-1} \mid X_{i-1}$$

$$K'_i = S_i(K'_{i-1})$$

$$M'_i = PC(K'_i) = PC(S_i(K'_{i-1})) = PC(S_i(K_{i-1} \mid X_{i-1}))$$

$$= PC(S_i(K_{i-1})) \mid PC(S_i(X_{i-1})).$$

Les dernières égalités se déduisent des propriétés des opérateurs linéaires PC, $S_i$, " $\mid$ ". De plus, comme $PC(S_i(K_{i-1})) = M_i$ (cf. l'exemple de la figure 2), on en déduit finalement que :

$$M'_i = m_i \mid PC(S_i(X_{i-1})).$$

L'étape ET3 de calcul de différence est effectuée après l'étape d'initialisation ET0. L'étape ET3 peut être réalisée avant, en parallèle ou après l'étape ET2. L'étape ET3 actualise la valeur $X_{i-1}$ du paramètre de masquage $X_0$ puis détermine la contribution $C_i$ apportée par $X_{i-1}$ à la clé dérivée $M_i'$.

L'étape ET3 est similaire à l'étape ET2 de calcul de clé ; l'étape ET3 comprend une opération $S_i$ pour fournir $X_i$ par décalage des bits du paramètre $X_{i-1}$, et une opération PC de permutation /compression pour fournir $C_i$. La contribution $C_i$ est ainsi calculée selon la relation : $C_i = PC(X_i) = PC(S_i(X_{i-1}))$. On en déduit finalement $M'_i = M_i \mid C_i$.

L'étape ET4 de démasquage est une sous-étape de l'étape de transformation F' (qui correspond à la transformation F modifiée par l'ajout de l'étape ET4 selon l'invention); l'étape ET4 est effectuée entre l'opération de combinaison par un OU-Exclusif et l'opération de substitution non linéaire SBOX comme dans l'exemple précédent. L'étape ET4 vise à enlever la contribution $C_i$ apportée par le paramètre de masquage $X_i$ actualisé, en utilisant l'opérateur " $\mid^{-1}$ ". Après l'étape ET4, la variable qui apparaît à l'entrée de l'opérateur de type SBOX est égale à :

$$(E(R_{i-1}) + M'_i \mid^{-1} C_i = E(R_{i-1}) + M_i \mid C_i \mid^{-1} C_i$$

$$= E(R_{i-1}) + M_i$$

Elle est donc identique à la variable qui apparaît à l'entrée de l'opérateur SBOX d'un procédé similaire (figures 1, 2) mais non sécurisé selon l'invention. En conséquence, la donnée $R_i$ qui apparaît en sortie de l'étape de transformation F' est identique à celle qui apparaît en sortie de l'opération de transformation F du procédé DES non sécurisé (figures 1, 2).

Ainsi, avec le procédé DES sécurisé selon l'invention, les données intermédiaires calculées $L_i$, $R_i$, pour i variant de 1 à 16, sont identiques à celles obtenues par un procédé DES classique. Par contre, avec le procédé sécurisé selon l'invention, aucune des clés utilisées (clé secrète, clés intermédiaires, clés dérivées) ne sont accessibles par une attaque de type SPA. Plus précisément, une attaque de type SPA sur les étapes du procédé correspondant au calcul des clés dérivées (key scheduling) ne fournit aucune information pertinente sur la clé secrète et / ou sur l'une des clés intermédiaires $K_i$ ou dérivées $M_i$. En effet, la valeur de ces clés est différente à chaque mise en oeuvre du procédé, quelle que soit la valeur de la donnée d'entrée ou la clé secrète utilisée par le procédé.

Des modifications et / ou améliorations du procédé de la figure 6 sont possibles, sans sortir du cadre de l'invention.

Par exemple, dans le procédé DES de la figure 6, l'étape de calcul de clé ET2 et l'étape de calcul de différence ET3 sont réalisées au cours de la ronde d'opérations qui utilise la clé $M'_i$ et la contribution $C_i$ que les étapes ET2, ET3 produisent.

Il est cependant possible de réaliser les étapes ET2, ET3 indépendamment des rondes d'opérations du procédé DES. Par exemple, il est possible de réaliser toutes les étapes ET2, ET3 lors de la phase d'initialisation du procédé, après l'étape ET0 de choix de $X_0$. Toutes les clés $M'_1$, $M'_{16}$, et toutes les contributions $C_1$ à $C_{16}$ sont dans ce cas mémorisées puis fournies à chaque ronde d'opérations, lorsqu'elles sont utilisées.

Il est à noter enfin, que tous les exemples décrits ci-dessus doivent être considérés comme tels et ne sont pas limitatifs de l'invention.

L'essentiel, dans l'invention est d'introduire un paramètre aléatoire dans un procédé de cryptage, de sorte que, lors de deux mises en oeuvre du procédé par un composant, ce dernier utilise des clés (secrètes, intermédiaires, dérivées, etc...) différentes, quelle que soit la valeur de la donnée d'entrée et / ou de la clé secrète et / ou de la donnée de sortie, et en particulier lors de deux mises en oeuvre utilisant la même donnée d'entrée et / ou la même donnée secrète et / ou la même donnée de sortie. Ainsi, en utilisant des clés différentes à chaque mise en oeuvre, le procédé laisse des traces différentes ; il est donc insensible aux attaques SPA.

**Revendications**

1. Procédé sécurisé de calcul cryptographique pour fournir une donnée de sortie (MS) à partir d'une donnée d'entrée (ME) et d'une clé secrète ($K_0$), le procédé comprenant plusieurs étapes de calcul de clé (ET2), chacune fournissant une clé dérivée actualisée ($M'_1$, $M'_i$) à partir d'une clé dérivée précédemment calculée (M'i-1) par l'étape de calcul de clé précédente selon une loi de calcul de clé connue, une première clé dérivée actualisée ($M'_1$) étant obtenue à partir de la clé secrète ($K_0$),
   le procédé étant **caractérisé en ce qu'**il comprend également une seule étape de masquage (ET1), effectuée avant la première étape de calcul de clé (ET2), pour masquer la clé secrète ($K_0$) de sorte que chaque clé dérivée actualisée ($M'_1$, $M'_i$ soit différente à chaque mise en oeuvre du procédé.

2. Procédé selon la revendication 1, **caractérisé en ce que**, lors de l'étape de masquage (ET1), un paramètre de masquage ($X_0$) choisi aléatoirement est mélangé à la clé secrète ($K_0$), pour fournir une clé secrète masquée ($K'_0$), la première clé dérivée ($M'_1$) étant calculée à partir de la clé secrète masquée ($K_0$) lors de la première étape de calcul de clé (ET2).

3. Procédé selon la revendication 2, **caractérisé en ce que** l'étape de masquage (ET1) est réalisée lors d'une phase d'initialisation (ET0, ET1) du procédé.

4. Procédé selon l'une des revendications 2 à 3, **caractérisé en ce qu'**il comprend également :

   - une étape de calcul (ET5) utilisant une clé dérivée actualisée ($M'_1$, $M'_i$), et
   - une étape de démasquage (ET4), exécutée après l'étape de calcul (ET5), pour supprimer une contribution du paramètre de masquage ($X_0$) au résultat de l'étape de calcul (ET5) précédente.

5. Procédé selon l'une des revendications 2 à 4, **caractérisé en ce que**, au cours de l'étape de masquage (ET1), l'opération suivante est réalisée :

$$K'_0 = K_0 \mid X_0,$$

K'$_0$ étant la clé secrète masquée,
K$_0$ étant la clé secrète
X$_0$ étant le paramètre de masquage,
" | " étant un opérateur de mélange

6. Procédé selon la revendication 5, **caractérisé en ce que** l'opérateur de mélange utilisé est un opérateur linéaire à deux paramètres.

7. Procédé selon l'une des revendications 5 ou 6, **caractérisé en ce que** l'opérateur de mélange est un opérateur OU-Exclusif.

8. Procédé selon la revendication 4, **caractérisé en ce que**, lors de l'étape de démasquage (ET4), un opérateur inverse de l'opérateur de mélange est utilisé.

9. Procédé selon l'une des revendications 2 à 8, **caractérisé en ce qu'**il comprend plusieurs étapes de calcul (ET5) utilisant chacune une clé dérivée actualisée (M'$_1$, M'$_i$), et **en ce qu'**une étape de démasquage (ET4) est exécutée après chaque étape de calcul (ET5), pour supprimer la contribution du paramètre de masquage (X$_0$) au résultat de l'étape de calcul (ET5) précédente.

10. Procédé selon l'une des revendications 1 à 9, de type DES comprenant N rondes d'opérations, chaque ronde d'opérations utilisant une clé dérivée actualisée (M'$_1$, ..., M'$_{16}$), l'étape de masquage (ET1) étant réalisée avant une première ronde du procédé de type DES.

11. Procédé selon la revendication 10, procédé au cours duquel, à chaque ronde d'opérations, une transformation (F) est réalisée qui comprend :

    - une étape de calcul (ET5) pour combiner une donnée intermédiaire calculée lors d'une précédente ronde et une clé dérivée actualisée (M'$_1$, ..., M'$_{16}$) ,
    - une étape de démasquage (ET4) réalisée après l'étape de calcul.

12. Composant électronique, **caractérisé en ce qu'**il comprend des moyens adaptés pour réaliser un procédé sécurisé de calcul cryptographique selon l'une des revendications 1 à 11.

**Patentansprüche**

1. Gesichertes Verfahren zur kryptographischen Berechnung, um einen Ausgangsdatenwert (MS) ausgehend von einem Eingangsdatenwert (ME) und von einem Geheimschlüssel (K$_0$) zu liefern,
   wobei das Verfahren mehrere Schlüsselberechnungsschritte (ET2) aufweist, von denen jeder ausgehend von einem vorher durch den vorhergehenden Schlüsselberechnungsschritt gemäß einem bekannten Schlüsselberechnungsgesetz berechneten abgeleiteten Schlüssel (M'$_{i-1}$) einen aktualisierten abgeleiteten Schlüssel (M'$_1$, M'$_i$) liefert, wobei ein erster aktualisierter abgeleiteter Schlüssel (M'$_1$) ausgehend vom Geheimschlüssel (K$_0$) erhalten wird,
   wobei das Verfahren **dadurch gekennzeichnet ist, dass** es ebenfalls einen einzigen Verdeckungsschritt (ET1) aufweist, der vor dem ersten Schlüsselberechnungsschritt (ET2) durchgeführt wird, um den Geheimschlüssel (K$_0$) so zu verdecken, dass jeder aktualisierte abgeleitete Schlüssel (M'$_1$, M'$_i$) bei jeder Durchführung des Verfahrens unterschiedlich ist.

2. Verfahren nach Anspruch 1, **dadurch gekennzeichnet, dass** während des Verdeckungsschritts (ET1) ein zufällig gewählter Verdeckungsparameter (X$_0$ mit dem Geheimschlüssel (K$_0$) gemischt wird, um einen verdeckten Geheimschlüssel (K'o) zu liefern, wobei der erste abgeleitete Schlüssel (M'$_1$) während des ersten Schlüsselberechnungsschrittes (ET2) ausgehend vom verdeckten Geheimschlüssel (K$_0$) berechnet wird.

3. Verfahren nach Anspruch 2, **dadurch gekennzeichnet, dass** der Verdeckungsschritt (ET1) während einer Initialisierungsphase (ET0, ET1) des Verfahrens erfolgt.

4. Verfahren nach einem der Ansprüche 2 bis 3, **dadurch gekennzeichnet, dass** es ebenfalls aufweist:

- einen Rechenschritt (ET5), der einen aktualisierten abgeleiteten Schlüssel (M'$_1$, M'$_i$) verwendet, und
- einen Aufdeckungsschritt (ET4), der nach dem Rechenschritt (ET5) durchgeführt wird, um einen Beitrag des Verdeckungsparameters (X$_0$) zum Ergebnis des vorhergehenden Rechenschrittes (ET5) zu beseitigen.

5. Verfahren nach einem der Ansprüche 2 bis 4, **dadurch gekennzeichnet, dass** während des Verdeckungsschrittes (ET1) die folgende Operation durchgeführt wird:

$$K'_0 = K_0 \mid X_0,$$

wobei

K'$_0$ der verdeckte Geheimschlüssel ist,
K$_0$ der Geheimschlüssel ist,
X$_0$ der Verdeckungsparameter ist,
" | " ein Mischoperator ist.

6. Verfahren nach Anspruch 5, **dadurch gekennzeichnet, dass** der verwendete Mischoperator ein linearer Operator mit zwei Parametern ist.

7. Verfahren nach einem der Ansprüche 5 oder 6, **dadurch gekennzeichnet, dass** der Mischoperator ein Exklusiv-ODER-Operator ist.

8. Verfahren nach Anspruch 4, **dadurch gekennzeichnet, dass** während des Aufdeckungsschrittes (ET4) ein zum Mischoperator inverser Operator verwendet wird.

9. Verfahren nach einem der Ansprüche 2 bis 8, **dadurch gekennzeichnet, dass** es mehrere Rechenschritte (ET5) aufweist, die je einen aktualisierten abgeleiteten Schlüssel (M'$_1$, M'$_i$) verwenden, und dass ein Aufdeckungsschritt (ET4) nach jedem Rechenschritt (ET5) durchgeführt wird, um den Beitrag des Verdeckungsparameters (X$_0$) zum Ergebnis des vorhergehenden Rechenschrittes (ET5) zu beseitigen.

10. Verfahren nach einem der Ansprüche 1 bis 9, vom DES-Typ mit N Runden von Operationen, wobei jede Runde von Operationen einen aktualisierten abgeleiteten Schlüssel (M'$_1$, ..., M'$_{16}$) verwendet, wobei der Verdeckungsschritt (ET1) vor einer ersten Runde des Verfahrens vom DES-Typ durchgeführt wird.

11. Verfahren nach Anspruch 10, während dem in jeder Runde von Operationen eine Transformation (F) durchgeführt wird, die aufweist:

- einen Rechenschritt (ET5), um einen während einer vorhergehenden Runde berechneten Zwischendatenwert und einen aktualisierten abgeleiteten Schlüssel (M'$_1$, ..., M'$_{16}$) zu kombinieren,
- einen Aufdeckungsschritt (ET4), der nach dem Rechenschritt durchgeführt wird.

12. Elektronisches Bauteil, **dadurch gekennzeichnet, dass** es ein gesichertes Verfahren zur kryptographischen Berechnung nach einem der Ansprüche 1 bis 11 aufweist.

### Claims

1. Secure cyrptographic calculation method for supplying an output data item (MS) from an input data item (ME) and a secret key (K$_0$), the method comprising several key-calculation steps (ET2), each supplying an updated derived key (M'$_1$, M'$_i$) from a derived key (M'i-1) previously calculated by the previous key-calculation step according to a known key-calculation law, a first updated derived key (M'$_1$) being obtained from the secret key (K$_0$), the method being **characterised in that** it also comprises a single masking step (ET1), performed before the first key-calculation step (ET2), in order to mask the secret key (K$_0$) so that each updated derived key (M'$_1$, M'$_i$) is different at each implementation of the method.

2. Method according to claim 1, **characterised in that**, during the masking step (ET1), a randomly chosen masking parameter (X$_0$) is mixed with the secret key (K$_0$) in order to supply a masked secret key (K'$_0$), the first derived key

$(M'_1)$ being calculated from the masked secret key $(K_0)$ during the first key-calculation step (ET2).

3. Method according to claim 2, **characterised in that** the masking step (ET1) is performed during an initialisation phase (ET0, ET1) of the method.

4. Method according to one of claims 2 to 3, **characterised in that** it also comprises:

   - a calculation step (ET5) using an updated derived key $(M'_1, M'_i)$, and

   - a demasking step (ET4), performed after the calculation step (ET5), in order to eliminate a contribution of the masking parameter $(X_0)$ to the result of the previous calculation step (ET5).

5. Method according to one of claims 2 to 4, **characterised in that**, during the masking step (ET1), the following operation is performed:
   $K'_0 = K_0 \mid X_0,$

   $K'_0$ being the masked secret key,
   $K_0$ being the secret key,
   $X_0$ being the masking parameter,
   " |" being a mixing operator.

6. Method according to claim 5, **characterised in that** the mixing operator used is a linear operator with two parameters.

7. Method according to one of claims 5 or 6, **characterised in that** the mixing operator is an exclusive OR operator.

8. Method according to claim 4, **characterised in that**, during the demasking step (ET4), an operator that is the inverse of the mixing operator is used.

9. Method according to one of claims 2 to 8, **characterised in that** it comprises several calculation steps (ET5) each using an updated derived key $(M'_1, M'_i)$, and **in that** a demasking (ET4) is executed after each calculation step (ET5), in order to eliminate the contribution of the masking parameter $(X_0)$ to the result of the previous calculation step (ET5).

10. Method according to one of claims 1 to 9, of the DES type comprising ten rounds of operations, each random operation using an updated derived key $(M'_1,...,M'_{16})$ the masking step (ET1) being performed before a first round of the DES-type method.

11. Method according to claim 10, a method during which, at each round of operations, a transformation (F) is performed that comprises:

   - a calculation step (ET5) for combining an intermediate data item calculated during a previous round and an updated derived key $((M'_1, ..., M'_{16}),$

   - a demasking step (ET4) performed after the calculation step.

12. Electronic component, **characterised in that** it comprises means adapted for performing a secure cryptographic calculation method according to one of claims 1 to 11.

**Fig. 1 (art antérieur)**

**Fig. 3 (art antérieur)**

$R_{i-1}$       $K_{i-1}$

E

$E(R_{i-1})$

+    $M_i$    PC    $S_i$

$E(R_{i-1}) + M_i$

$K_i$

SBOX

P

$R_i = P(SBOX(E(R_{i-1})+M_i))$

**Fig. 2 (art antérieur)**

DEBUT

$R_0$      $K_0$

ET2

E

$E(R_0)$

S₁

$M_1$    PC

F    +    $K_1$

$E(R_0) + M_1$

SBOX

P

$R_1 = P(SBOX(E(R_0)+M_1))$

FIN

**Fig. 4**

12

**Fig. 5**

**Fig. 6**